# EUROPÄISCHE PATENTSCHRIFT

(11) **EP 0 510 466 B1**
(45) Veröffentlichungstag und Bekanntmachung des Hinweises auf die Patenterteilung: **28.12.1994**
(21) Anmeldenummer: 92106300.4
(22) Anmeldetag: 11.04.1992
(51) Int. Cl.: B60T 8/66

(54) **Schlupfregelanlage**
Slip control system
Contrôle de patinage

(30) Priorität: 24.04.1991 DE 4113278
(43) Veröffentlichungstag der Anmeldung: 28.10.1992
(73) Patentinhaber: ROBERT BOSCH GMBH, 70442 Stuttgart (DE)
(72) Erfinder: Isella, Thomas, Dipl.-Ing., W-7145 Markgröningen (DE); Burg, Andreas, Dipl.-Ing., W-7144 Asperg (DE); Schmitt, Johannes, Dipl.-Ing., W-7145 Markgröningen (DE)

(56) Entgegenhaltungen:
- DE-A- 3 323 807
- GB-A- 2 066 477

## Beschreibung

### Stand der Technik

Bei Schlupfregelsystemen, z.B. Antiblockierregelsystemen, Antriebsschlupfregelsystemen usw. wirken sich unterschiedliche Reifendurchmesser der Räder negativ aus, weil bei unterschiedlichen Reifendurchmessern unterschiedliche Schlupfgrößen vorgetäuscht werden und damit bei unterschiedlichen Verhältnissen die Regelung ausgelöst wird.

Es ist zur Vermeidung dieses Nachteils bekannt, (EP-B1 0133 381) die Radgeschwindigkeitssignale jeweils zweier Räder miteinander zu vergleichen und aus der Abweichung voneinander einen Korrekturwert abzuleiten, mit dem eine der Geschwindigkeiten zum Wert der andern hin korrigiert wird. Aus der DE-A1 37 38 914 ist es entnehmbar, daß dies im schlupffreien Betrieb erfolgen muss und nicht in der Kurve erfolgen darf.

### Vorteile der Erfindung

Die Erfindung bringt den Vorteil, daß für den ersten Schritt der Angleichung nicht drauf geachtet werden braucht, ob eine Geradausfahrt vorliegt, weil auch bei Kurvenfahrt die Räder einer Fahrzeugseite zumindest ab einer bestimmten Geschwindigkeit bei PKW praktisch auf dem gleichen Bahnradius laufen und durch die Kurvenfahrt keine unterschiedliche Geschwindigkeit dieser Räder zustande kommt. Der Querabgleich, das heißt die Anpassung der Geschwindigkeit der Räder der einen Fahrzeugseite an die der anderen erfolgt dann, wenn Geradeausfahrt erkannt wird. Daraus folgen geringere Einbußen in der Leistungsfähigkeit des Regelsystems, bis zum Erkennen des Ableichs der Reifentolernz.

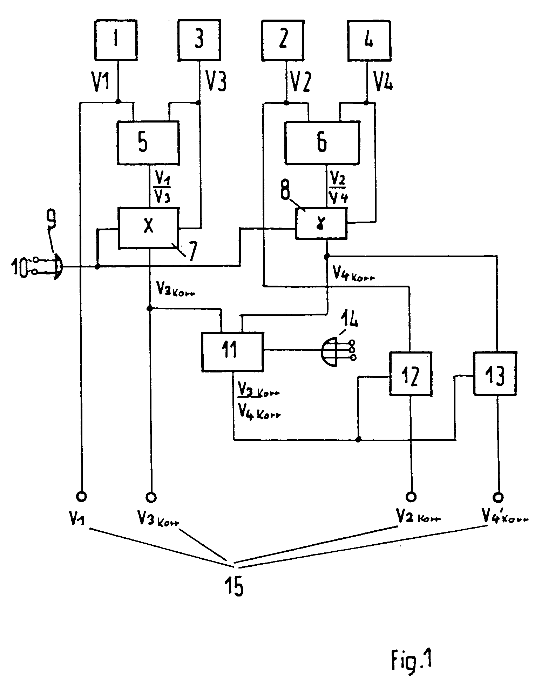

Anhand der Fig. 1 der Zeichnung wird ein Ausführungsbeispiel der Neuerung erläutert.

Die den Rädern des Fahrzeugs zugeordneten Geschwindigkeitssensoren sind mit 1 bis 4 bezeichnet. Der Sensor 1 ist mit dem linken Vorderrad, Sensor 2 dem rechten Vorderrad, Sensor 3 dem linken Hinterrad und Sensor 4 dem rechten Hinterrad zugeordnet. In den Vergleichern 5 bzw. 6 wird das Verhältnis der Radgeschwindigkeiten jeweils einer Fahrzeugseite v₁/v₃ bzw. v2/v4 gebildet, das als Korrekturwert K₁₃ bzw. K₂₄ zur Korrektur der Radgeschwindigkeit v₃ bzw. v₄ in Blöcken 7 und 8 benutzt wird. Die Korrekturblöcke 7 und 8 beeinflussen den Geschwindigkeitswert v₃ bzw. v₄ nur, wenn die Räder schlupffrei sind, also nicht gebremst wird, keine Antriebsregelung und keine ABS-Regelung läuft usw. Dies ist durch das Oder-Gatter mit mehreren Eingängen 10 angedeutet. Die korrigierten Geschwindigkeiten v₃ₖₒᵣ und V₄ₖₒᵣ (oder die Geschwindigkeiten v₁ und v₂) werden einem Block 11 zugeführt, der das Verhaltnis v₃ₖₒᵣ/v₄ₖₒᵣ (bzw. v₁/v₂)) bildet und den entstehenden Korrekturfaktor K₃₄ (bzw. K₁₂) Korrekturgliedern 12,13 zur Korrektur der Geschwindigkeiten v₂ (in v₂ₖₒᵣ₎ und v_{/4kor} (in v₄ₖₒᵣ) zuführt, wenn Schlupffreiheit vorliegt und keine Kurve gefahren wird (Odet-Gatter 14). An den Klemmen 15 stehen die un-korrigierte Radgeschwindigkeit v₁ und drei auf v₁ hinkorrigierte Radgeschwindigkeiten zur Verfügung, die eines Schlupfregler zugeführt werden können.

## Patentansprüche

1. Schlupfregelanlage für ein Kraftfahrzeug enthaltend Sensoren (1-4) zur Ermittlung der Geschwindigkeit der Räder, ein Steuergerät, dem diese Signale zugeführt werden und das Schlupfregelsignale erzeugt und Regeleinrichtungen, die mit diesen Schlupfregelsignalen im Sinne einer Reduzierung des Schlupfs beaufschlagt werden, enthaltend weiterhin Radgeschwindigkeitssignalbeeinflussungsmittel, (5,6,11,12,13), um unterschiedliche Radien der Räder auszugleichen, wozu aus dem Vergleich der Geschwindigkeitssignale je zweier Räder ein Korrekturfaktor gewonnen wird, mit dem das Geschwindigkeitssignal eines der verglichenen Räder zwecks Angleichung beaufschlagt wird, dadurch gekennzeichnet, daß zwei erste Vergleichseinrichtungen (5,6) vorgesehen sind, in denen jeweils die Geschwindigkeitssignale der Räder einer Fahrzeugseite verglichen werden und daß wenigstens eine nur bei einer Geradeausfahrt einen Korrekturfaktor erzeugende zweite Vergleichseinrichtung (11) vorgesehen ist, in der ein achsweiser Vergleich der Radgeschwindikeitssignale erfolgt und deren bei Geradeausfahrt erzeugter Korrekturfaktor zum Angleich der Radgeschwindigkeitssignale einer Fahrzeugseite an die der anderen Seite dient.

## Claims

1. Anti-slip control system for a motor vehicle containing sensors (1-4) for determining the speed of the wheels, a control device to which these signals are fed and which produces anti-slip control signals and control devices which are acted on by these anti-slip control signals with the aim of reducing the slip, also containing wheel-speed signal-influencing means (5, 6, 11, 12, 13) in order to compensate differing radii of the wheels, for which purpose a correction factor is acquired from the comparison of the speed signals of two wheels in each case, by which correction factor the speed signal of one of the compared wheels is acted on for the purpose of adjustment, characterized in that two first comparison devices (5, 6) are provided in which in each case the speed signals of the wheels of one side of the vehicle are compared, and in that at least one second comparison device (11) which produces a correction factor only for straight-ahead travel is provided, in which comparison device (11) a comparison of the wheel-speed signal on an axle-by-axle basis takes place and whose correction factor which is produced in the case of straight-ahead travel serves to bring the wheel-speed signals of one side of the vehicle into line with those of the other side.

## Revendications

1. Régulation antipatinage pour un véhicule automobile, comprenant des capteurs (1-4) pour déterminer la vitesse des roues, un appareil de commande recevant ces signaux et les signaux de régulation antipatinage ainsi que des installations de régulation qui reçoivent ces signaux de régulation antipatinage dans le sens d'une réduction du patinage, et enfin des moyens influençant également le signal de vitesse de roue (5, 6, 11, 12, 13) pour compenser des rayons différents des roues, la comparaison des signaux de vitesse de chaque fois deux roues donnant un coefficient de correction par lequel on agit sur le signal de vitesse de l'une des roues comparées, pour assurer l'adaptation, installation caractérisée en ce qu'elle comporte deux premières installations de comparaison (5, 6) qui comparent chaque fois les signaux de vitesse des roues d'un côté du véhicule et au moins une seconde installation de comparaison (11) qui ne crée un coefficient de correction que pour le déplacement en ligne droite, et compare, par essieu, les signaux de vitesse de roue, le coefficient de correction créé pour le déplacement en ligne droite étant utilisé pour adapter les signaux de vitesse de roue d'un côté du véhicule à ceux de l'autre côté.
